# EUROPEAN PATENT APPLICATION

(11) **EP 1 674 519 A1**
(43) Date of publication of application: **28.06.2006**
(21) Application number: 04792475.8
(22) Date of filing: 15.10.2004
(51) Int. Cl.: C08L 9/02, C08L 33/06, C08L 33/20

(54) **POLYMER ALLOY, CROSSLINKED OBJECT, AND INDUSTRIAL PART**

(30) Priority: 17.10.2003 JP 2003357959
(71) Applicant: ZEON CORPORATION, Tokyo 100-8246 (JP)
(72) Inventor: KOMIYAMA, Shinji, c/o Zeon Corporation, Tokyo 100-8246 (JP); NUMATA, Hiromi, c/o Zeon Corporation, Tokyo 100-8246 (JP); TOYA, Takashi, c/o Zeon Corporation, Tokyo 100-8246 (JP); YOKOYAMA, Seiji, c/o Zeon Corporation, Tokyo 100-8246 (JP); FUJITA, Haruhiko, c/o Zeon Corporation, Tokyo 100-8246 (JP)
(74) Representative: Albrecht, Thomas
(86) International application number: PCT/JP2004/015258
(87) International publication number: WO 2005/037914

(57) **Abstract**

A polymer alloy composed of 5 to 88 wt% of α,β-ethylenically unsaturated nitrile-conjugated diene copolymer rubber (A) having a number-average molecular weight of 50,000 to 150,000, 10 to 60 wt% of an acrylic copolymer (B) including units derived from an α,β-ethylenically unsaturated nitrile monomer, and 2 to 50 wt% of α,β-ethylenically unsaturated nitrile-conjugated diene copolymer rubber (C) having a number-average molecular weight of 1,000 to 20,000. According to the present invention, it is possible to provide a polymer alloy having excellent oil resistance and ozone resistance and, moreover, excellent resistance to cracking caused by solvents.

## Description

### TECHNICAL FIELD

The present invention relates to a polymer alloy suitably used as a material of a variety of industrial parts, a crosslinked object of the polymer alloy and an industrial part composed of the crosslinked object.

### BACKGOUND ART

Since nitrile copolymer rubber, such as acrylonitrile-butadiene rubber (NBR), is excellent in oil resistance, it has been used for a variety of use objects, such as a fuel hose used for piping of a fuel system of vehicles. However, nitrile copolymer rubber has poor ozone resistance, so that a polymer alloy having improved ozone resistance, etc. by blending a vinyl chloride resin into nitrile copolymer rubber has been proposed and used widely as automobile parts typified by a fuel hose.

However, a vinyl chloride resin included in the polymer alloy possibly causes environmental problems due to chloride atoms in the resin at the time of disposal processing, so that there is a demand for a new material capable of improving ozone resistance without including chloride atoms and other halogen.

An oil resistant polymer alloy formed by a liquid copolymer of acrylonitrile, butadiene and/or isoprene and ethylenically unsaturated carboxylic acid having Mn of 500 to 10,000 and NBR has been also proposed (refer to the patent article 1).

However, the polymer alloy described in the patent article 1 has the configuration that both of the liquid copolymer and NBR include double bonds much in their main chain, so that the ozone resistance has not been satisfactory.

Also, as a technique for improving ozone resistance without using a vinyl chloride resin or other halogen-containing resin, a polymer alloy of nitrile copolymer rubber and a vinyl based resin having a crosslinking functional group has been proposed (refer to the patent article 2).

However, in the polymer alloy described in the patent article 2, a part of the vinyl based resin has a crosslinking functional group, so that when heated in steps of kneading and drying, etc., it hardens due to crosslinking reaction, the vinyl based resin does not finely dispersed in the nitrile copolymer rubber and the ozone resistance becomes poor in some cases.

Note that when using this kind of polymer alloy as a fuel hose in a state of being in contact with gasoline or other solvent, resistance to cracking caused by solvents is required to be excellent besides the ozone resistance. The techniques explained above have been unable to satisfy this.
[Patent Article 1]
   The Japanese Patent Publication No. 50-27486
[Patent Article 2]
   The Japanese Unexamined Patent Publication No. 2001-226527

### DISCLOSURE OF THE INVENTION

An object of the present invention is to provide a polymer alloy having excellent oil resistance, ozone resistance and resistance to cracking caused by solvents, a crosslinked object of the polymer alloy, and an industrial part composed of the crosslinked object.

The present inventors found that the above object can be attained by using a polymer alloy having a specific composition composed of specific two kinds of α,β-athylenically unsaturated nitrile-conjugated diene copolymer rubber and a specific acrylic copolymer and completed the present invention.

Namely, according to the present invention, the first to fifth inventions below can be provided.

1. A polymer alloy composed of 5 to 88 wt% of α,β-ethylenically unsaturated nitrile-conjugated diene copolymer rubber (A) having a number-average molecular weight of 50,000 to 150,000, 10 to 60 wt% of an acrylic copolymer (B) including units derived from an α,β-ethylenically unsaturated nitrile monomer, and 2 to 50 wt% of α,β-ethylenically unsaturated nitrile-conjugated diene copolymer rubber (C) having a number-average molecular weight of 1,000 to 20,000.

2. The polymer alloy explained above, wherein a content of units derived from an α,β-ethylenically unsaturated nitrile monomer in the acrylic copolymer (B) is 1 to 65wt%.

3. A crosslinkable polymer alloy formed by blending a crosslinking agent in the polymer alloy explained in the 1 or 2 above.

4. A crosslinked object formed by performing crosslinking on the crosslinkable polymer alloy explained in the 3 above.

5. An industrial part comprising the crosslinked object explained in the 4 above.

According to the present invention, it is possible to provide a polymer alloy having excellent oil resistance, ozone resistance and resistance to cracking caused by solvents, a crosslinked object of the polymer alloy, and an industrial part composed of the crosslinked object.

### BEST MODE FOR CARRYING OUT THE INVENTION

A polymer alloy of the present invention is composed of α,β-ethylenically unsaturated nitrile-conjugated diene copolymer rubber (A) having a number-average molecular weight of 50,000 to 150,000, an acrylic copolymer (B) having units derived from an α,β-ethylenically unsaturated nitrile monomer, and α,β-ethylenically unsaturated nitrile-conjugated diene copolymer rubber (C) having a number-average molecular weight of 1,000 to 20,000.

Note that, in the explanation below, the α,β-ethylenically unsaturated nitrile-conjugated diene copolymer rubber (A) having a number-average molecular weight of 50,000 to 150,000 will be referred to as rubber (A), the acrylic copolymer (B) having units derived from an α,β-ethylenically unsaturated nitrile monomer will be referred to as a copolymer (B), and the α,β-ethylenically unsaturated nitrile-conjugated diene copolymer rubber (C) having a number-average molecular weight of 1,000 to 20,000 will be referred to as rubber (C).

The rubber (A) used in the present invention is obtained by copolymerizing an α,β-ethylenically unsaturated nitrile monomer and a conjugated diene monomer and has a large molecular weight.

A number-average molecular weight of the rubber (A) is 50,000 to 150,000, preferably 60,000 to 120,000 and more preferably 70,000 to 100,000 in terms of polystyrene equivalent measured by gel permeation chromatography. When the molecular weight is too small, mechanical strength of the crosslinked object becomes poor, while when too large; workability of the polymer alloy becomes poor as a molding material.

A content of units derived from an α,β-ethylenically unsaturated nitrile monomer in the rubber (A) is preferably 25 to 80 wt%, more preferably 28 to 60 wt%, and particularly preferably 30 to 55 wt%. A content of conjugated diene monomer units in the rubber (A) is preferably 20 to 75 wt%, more preferably 40 to 72 wt%, and particularly preferably 45 to 70 wt%. When the content of the units derived from an α,β-ethylenically unsaturated nitrile monomer is too small and the content of the conjugated diene monomer units is too large, oil resistance of the crosslinked object may decline. Inversely, when the content of the units derived from an α,β-ethylenically unsaturated nitrile monomer is too large and the content of the conjugated diene monomer units is too small, mechanical strength of the crosslinked object may decline at high temperature.

As the α,β-ethylenically unsaturated nitrile monomer, for example, acrylonitrile and methacrylonitrile, etc. may be mentioned, and acrylonitrile is preferable.

As the conjugated diene monomer, for example, 1,3-butadiene, isoprene, 2,3-dimethyl-1,3-butadiene and 1,3-pentadiene, etc. may be mentioned, and 1,3-butadiene is preferable.

The rubber (A) may be copolymerized with other monomers, which can be copolymerized with the α,β-ethylenically unsaturated nitrile monomer and the conjugated diene monomer, within a range of not substantially hindering the effect of the present invention.

As such monomers, an unconjugated diene monomer, α-olefin, aromatic vinyl monomer, α,β-ethylenically unsaturated mono carboxylic acid, α,β-ethylenically unsaturated polycarboxylic acid or anhydrites thereof, α,β-ethylenically unsaturated carboxylic acid ester monomer and copolymerizable antioxidant, etc. may be mentioned.

As the unconjugated diene monomer, those having the carbon number of 5 to 12 are preferable and 1,4-pentadiene, 1,4-hexadiene, vinyl norbornene, dicyclopentadiene, etc. may be mentioned. As the α-olefin, those having the carbon number of 2 to 12 are preferable, and ethylene, propylene, 1-butene, 4-mathyl-1-pentene, 1-hexene, and 1-octene, etc. may be mentioned. As the aromatic vinyl monomer, styrene and α-methyl styrene, etc. may be mentioned. As the α,β-ethylenically unsaturated mono carboxylic acid, acrylic acid, methacrylic acid, etc. may be mentioned. As the α,β-ethylenically unsaturated polycarboxylic acid, itaconic acid, fumaric acid, maleic acid, etc. may be mentioned. As the α,β-ethylenically unsaturated polycarboxylic acid anhydride, itaconic anhydride, maleic anhydride, etc. may be mentioned.

As the α,β-ethylenically unsaturated carboxylic acid ester monomer, methyl acrylate, ethyl acrylate, n-dodecil acrylate, methylmethacrylate, ethylmethacrylate and other (meth)acrylic acid alkylester monomers having an alkyl group having the carbon number of 1 to 18; methoxymethyl acrylate, mathoxyethyl methacrylate and other (meth)acrylic acid alkoxy alkyl ester monomers having an alkoxy alkyl group having the carbon number of 2 to 12; α-cyanoethyl acrylate, β-cyanoethyl acrylate, cyanobutyl methacrylate and other (meth)acrylic acid cyanoalkyl ester monomer having a cyanoalkyl group having the carbon number of 2 to 12; 2-hydroxyethyl acrylate, 2-hydroxypropyl acrylate, 2-hydroxyethyl methacrylate and other (meth)acrylic hydroxyl alkyl ester monomers having a hydroxyalkyl group having the carbon number of 1 to 12; maleic acid monoethyl, itaconic acid mono n-butyl and other α,β-athylenic dicarboxylic acid monoalkyl ester monomer; maleic acid dimethyl, fumaric acid dimethyl, itaconic acid dimethyl, itaconic acid diethyl and other α,β-ethylenic dicarboxylic acid dialkyl ester monomer; dimethyl aminomethyl acrylate, diethyl aminoethyl acrylate and other amino group containing α,β-ethylenically unsaturated carboxylic acid ester; etc. may be mentioned.

As the copolymerizable antioxidant, N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, etc. may be mentioned.

A content of the above other monomer units in the rubber (A) is normally 50 wt% or smaller, and preferably 30 to 1 wt%.

The rubber (A) used in the present invention preferably does not include halogen atoms substantially. Specifically, a halogen content is preferably 0.5 wt% or smaller, more preferably 0.1 wt% or smaller, and particularly preferably 0 wt%. There is an advantage that the smaller the halogen content is, the more a load on the environment can be reduced at disposal processing.

The Mooney's viscosity (ML₁₊₄, 100°C) of the rubber (A) to be used in the present invention is preferably 10 to 300, more preferably 20 to 250, and particularly preferably 30 to 200. When the Mooney's viscosity is too low, mechanical property of the crosslinked object may decline, while when too high, the workability may decline.

A production method of the rubber (A) is not particularly limited and well known methods may be used, and emulsion polymerization method is preferably used. When producing the rubber (A) by an emulsion polymerization method, polymerization is performed in a reactor, wherein oxygen is removed, at 0 to 50°C. The respective monomers as above, an emulsifying agent, an initiator, and molecular weight adjuster, etc. are put in the reactor and brought to react. Not all amounts of the monomers and emulsifying agent, etc. have to be added before starting the reaction, and they may be freely divided to be added after the reaction starts. After the polymerization reaction finishes, coagulating agent may be added to emulsion polymerization liquid including the rubber (A) to coagulate the rubber (A), wash and dry to collect.

The copolymer (B) used in the present invention essentially includes units derived from an α,β-ethylenically unsaturated nitrile monomer and units derived from (meth)acrylic acid ester monomer.

As the units derived from an α,β-ethylenically unsaturated nitrile monomer, those mentioned in the case of the rubber (A) explained above may be mentioned. Among them, (meth)acrylonitrile is preferable.

A content of units derived from an α,β-ethylenically unsaturated nitrile monomer is preferably 1 to 65 wt%, more preferably 10 to 60 wt%, and particularly preferably 15 to 55 wt% of the entire copolymer (B). By including the units derived from an α,β-ethylenically unsaturated nitrile monomer in the above ranges, oil resistance of the polymer alloy improves. When the content of the units derived from an α,β-ethylenically unsaturated nitrile monomer is too small, oil resistance of the polymer alloy may decline, while when too large, the workability may decline.

As (meth)acrylic acid ester monomer, (meth)acrylic acid methyl, (math)acrylic acid ethyl, (meth)acrylic acid propyl, (meth)acrylic acid n-butyl, (moth)acrylic acid isobutyl, (meth)acrylic acid t-butyl, (math)acrylic acid 2-ethylhexyl, and (meth)acrylic acid octyl, etc. may be mentioned.

A content of units derived from (math)acrylate ester monomer in the copolymer (B) is preferably 40 to 90 wt%.

The copolymer (B) may be obtained by copolymerizing an α,β-ethylenically unsaturated nitrile monomer and (meth)acrylte ester monomer with other monomer, which can be copolymerized with the two.

This other monomer is not particularly limited, but monomers, wherein the main chain does not cause unsaturated bonding, are preferable and monomers not introducing a crosslinking group are preferable. As such monomers, aromatic vinyl monomers, vinyl ester monomers and vinyl ether monomers, etc. may be mentioned. As the aromatic vinyl monomers, styrene, vinyl toluene, α-methyl styrene, etc. may be mentioned. As the vinyl ester monomers, vinyl acetate, and propionic acid vinyl, etc. may be mentioned. As the vinyl ether monomers, methylvinyl ether, ethylvinyl ether, and hydroxybutyl vinyl ether, etc. may be mentioned.

The copolymer (B) used in the present invention preferably does not include halogen atoms substantially. Specifically, a halogen content is preferably 0.5 wt% or smaller, more preferably 0.1 wt% or smaller, and particularly preferably 0 wt%. The smaller the halogen content is, the more the same advantage as that in the case of the rubber (A) explained above can be obtained.

A number-average molecular weight (Mn) of the copolymer (B) is preferably 25,000 to 2,000,000, more preferably 50,000 to 1,000,000 and particularly preferably 100,000 to 700,000 in terms of polystyrene equivalent measured by gel permeation chromatography. When the Mn is too small, ozone resistance becomes poor, while when too large, molding workability may become poor.

A glass transition temperature (Tg) of the copolymer (B) is not particularly limited, but preferably -50 to 150°C, more preferably -30 to 120°C, and particularly preferably 0 to 100°C. When Tg of the copolymer (B) is too low, it easily becomes adhesive when kneading with the rubber (A) by a roll or Bunbary mixer and workability declines, while when Tg is too high, there arises a disadvantage that dispersibility to the rubber (A) becomes poor, etc.

A production method of the copolymer (B) used in the present invention is not particularly limited and emulsion polymerization, suspension polymerization or other method capable of obtaining a granular copolymer may be preferably applied. Seed polymerization may be performed in the emulsion polymerization and suspension polymerization, etc.

An average particle diameter of the copolymer (B) in the case of obtaining it in a granular state is not particularly limited and, for example, when measured by a light scattering method particle size analyzer (model N4 made by Coulter Inc.), it is preferably 10 µm or smaller, and more preferably 2 µm or smaller. When the average particle diameter is too large, ozone resistance of the crosslinked object tends to decline. The average particle diameter of the copolymer (B) can be controlled by the polymerization condition. Also, the average particle diameter can be also adjusted by pulverizing a mass copolymer (B) by a jet pneumatic type pulverizing machine, a mechanically-collision type pulverizing machine, a roll mill, a hummer mill, an impeller breaker, etc. and introducing the obtained pulverized substance to a classification apparatus, such as a wind power classifying apparatus and a sieve classification apparatus, for classifying.

The rubber (C) used in the present invention has a relatively light molecular weight and is obtained by copolymerizing α,β-ethylenically unsaturated nitrile monomer and a conjugated diene monomer. It is normally liquid rubber at the room temperature.

A number average molecular weight of the rubber (C) is 1,000 to 20,000, preferably 2,000 to 10,000 and more preferably 3,000 to 7,000 in terms of polystyrene equivalent measured by gel permeation chromatography. When the molecular weight of the rubber (C) is too small, mechanical strength of the crosslinked object becomes poor, while when too large, resistance to cracking caused by solvents becomes poor.

As the α,β-ethylenically unsaturated nitrile monomer, for example, acrylonitrile and methacrylonitrile,etc. may be mentioned. As the conjugated diene monomer, for example, 1,3-butadiene, isoprene, 2,3-dimethyl-1,3-butadiene, and 1,3-pentadiene, etc. may be mentioned.

A content of units derived from the α,β-ethylenically unsaturated nitrile monomer in the rubber (C) is preferably 25 to 80 wt%, more preferably 28 to 60 wt%, and particularly preferably 30 to 55 wt%. A content of units derived from the conjugated diene monomer in the rubber (C) is preferably 20 to 75 wt%, more preferably 40 to 72 wt%, and particularly preferably 45 to 70 wt%. When the content of units derived from the α,β-ethylenically unsaturated nitrile monomer is too small and the content of units derived from the conjugated diene monomer is too large, oil resistance and mechanical strength of the crosslinked object may decline. Inversely, when the content of units derived from the α,β-ethylenically unsaturated nitrile monomer is too large and the content of units derived from the conjugated diene monomer is too small, mechanical strength of the crosslinked object at a high temperature may decline.

The rubber (C) may be copolymerized with other monomers, which can be copolymerized with the α,β-ethylenically unsaturated nitrile monomer and the conjugated diene monomer, within a range of not substantially hindering the effect of the present invention. As such monomers, those explained as other monomers used in the rubber (A) explained above may be used.

A production method of the rubber (C) is not particularly limited and well known methods may be used, and emulsion polymerization method is preferably used. When producing the rubber (C) by an emulsion polymerization method, the same method as that for producing the rubber (A) by an emulsion polymerization method can be applied except for selecting an amount of a molecular weight adjusting agent used for the polymerization.

A content of the rubber (A) with respect to a total amount of the rubber (A), the copolymer (B) and the rubber (C) is 5 to 88 wt%, and preferably 10 to 75 wt%. When the content of the rubber (A) is too small, mechanical strength of the crosslinked object becomes poor, while when too much, the ozone resistance becomes poor.

A content of the copolymer (B) with respect to a total amount of the rubber (A), the copolymer (B) and the rubber (C) is 10 to 60 wt%, and preferably 20 to 50 wt%. When the content of the copolymer (B) is too small, ozone resistance of the crosslinked object becomes poor, while when too much, the rubber elasticity becomes poor.

A content of the rubber (C) with respect to a total amount of the rubber (A), the copolymer (B) and the rubber (C) is 2 to 50 wt%, and preferably 5 to 40 wt%. When the content of the rubber (C) is too small, resistance to cracking caused by solvents of the crosslinked object becomes poor, while when too much, the mechanical strength becomes poor.

The polymer alloy according to the present invention may include rubber and a resin in addition to the rubber (A), the copolymer (B) and the rubber (C) in a range of not hindering the effects and objects of the present invention. A content of the rubber or resin is normally 20 wt% or smaller, and preferably 15 wt% or smaller. When the content of the rubber, etc. is too much, ozone resistance and oil resistance of the polymer alloy decline.

The polymer alloy according to the present invention may include a compounding agent, such as carbon black, silica and other reinforcing agent; calcium carbonate, magnesium carbonate, clay, kaolin clay, talc, finely-powdered talc, mica, aluminum hydroxide, magnesium hydroxide, silicate, magnesium silicate, aluminum silicate, calcium silicate and other filler; α,β-unsaturated carboxylic acid metal salt; pigment; and antioxidant, etc.

The polymer alloy according to the present invention can be fabricated by the rubber (A) and (C), the copolymer (B) and the above compounding agents to be blended in accordance with need, etc. by a dry blend method, etc. for mixing by using a mixing machine, such as a roll and Banbury mixer, while heating. Alternately, it may be fabricated by using a latex coprecipitation method for mixing the rubber (A) and (C) and the copolymer (B) in a latex state and solidifying.

The crosslinkable polymer alloy of the present invention is obtained by blending a crosslinking agent in the above polymer alloy.

As the crosslinking agent, sulfur based crosslinking agents, organic peroxides and polyamine based crosslinking agents, etc. may be mentioned.

As sulfur based crosslinking agents, sulfur powder, precipitated sulfur and other sulfurs; 4,4'-dithiomorpholine, tetramethylthiuram disulfide, tetraethylthiuram disulfide, polymer polysulfide and other organic sulfur compounds; etc. may be mentioned.

As the organic peroxide, dialkyl peroxides, diacyl peroxides, and peroxyesters, etc. may be mentioned. As the dialkyl peroxide, dicumyl peroxide, di-t-butyl peroxide, 2,5-dimethyl-2,5-di(t-butyl peroxy)-3-hexine, 2,5-dimethyl-2,5-di(t-butyl peroxy)hexane, 1,3-bis(t-butyl peroxyisopropyl)benzene, etc. may be mentioned. As the diacyl peroxide, benzoil peroxide and isobutyryl peroxide, etc. may be mentioned. As the peroxyester, 2,5-dimethyl-2,5-bis(benzoyl peroxy)hexane, t-butyl peroxyisopropyl carbonate, etc.), etc. may be mentioned.

A polyamine-based crosslinking agent is a compound having two or more amino groups wherein a plurality of hydrogen of aliphatic hydrocarbon and aromatic hydrocarbon are substituted to be an amino group or hydrazide structure, that is, the structure expressed by -CONENH₂. As the polyamine-based crosslinking agent, aliphatic polyamines, aromatic polywmines, compounds having two or more hydrazide structures may be mentioned. As the aliphatic polyamines, hexamethylene diamine, hexamethylene diamine carbamate, tetramethylene pentamine, hexamethylene diamine-cinnamaldehyde addition product, hexamethylene diamine-dibenzoate salt, etc. may be mentioned. As the aromatic polyamines, 4,4'-methylene dianiline, 4,4'-oxydiphenylamine, m-phenylenediamine, p-phenylenediamine, 4,4'-methylene bis(o-chloroaniline), etc. may be mentioned. As the compounds having two or more hydrazide structures, dihydrazide isophthalate, adipic acid dihydrazide, sebacic acid dihydrazide, etc. may be mentioned.

A blending quantity of the crosslinking agent differs in accordance with a kind of the crosslinking agent, but preferably 0.1 to 10 parts by weight, more preferably 0.3 to 7 parts by weight, particularly preferably 0.5 to 5 parts by weight with respect to a total of 100 parts by weight of the rubber (A) and the rubber (C). When the use amount of the crosslinking agent is too small, compression permanent strain becomes large, while when too large, flexing fatigue resistance becomes poor.

When using a sulfur-based crosslinking agent, a crosslinking accelerator is normally used together. As the crosslinking accelerator, a zinc oxide, sulferamide-based crosslinking accelerator, guanidine-based crosslinking accelerator, thiazole-based crosslinking accelerator, thiuram-based crosslinking accelerator, dithioic acid salt based crosslinking accelerator, etc. may be mentioned. A use amount of the crosslinking accelerator is not particularly limited and may be determined in accordance with a use object of crosslinked object, required capability, a kind of a sulfur crosslinking agent, and a kind of the crosslinking accelerator, etc.

When using an organic peroxide, a crosslinking co-agent is normally used together. As the crosslinking co-agent, triallyl cyanurate, trimethylolpropane trimethacrylate, N,N'-m-phenylene bismaleimide, etc. may be mentioned. These may be dispersed in clay, calcium carbonate, silica, etc. to improve workability of a rubber composition for use. A use amount of the crosslinking co-agent is not particularly limited and may be determined in accordance with a use object of crosslinked object, required capability, a kind of a crosslinking agent, a kind of the crosslinking co-agent, etc.

A fabrication method of the crosslinkable polymer alloy according to the present invention is not particularly limited and a well known method for mixing a crosslinking agent in rubber may be used. Note that blending of a crosslinking agent is preferably performed by a method of hardly causing shear heat so as not to accelerate crosslinking when mixing. For example, it is preferable to mix components other than the crosslinking agent by Banbury mixing, then, to mix the crosslinking agent in the obtained mixture for mixing by a roll.

The crosslinked object of the present invention is formed by crosslinking the above crosslinkable polymer alloy. Crosslinking of the above crosslinkable polymer alloy can be performed by heating to a crosslinking start temperature of the crosslinking agent included in the polymer alloy or higher. The crosslinking temperature is preferably 100 to 200°C, more preferably 130 to 190°C, and particularly preferably 140 to 180°C in general crosslinking agents. When the temperature is too low, it is liable that crosslinking time becomes too long or the crosslinking density becomes too low. When the temperature is too high, it is liable that molding defective arises.

Also, the crosslinking time differs according to the crosslinking method, crosslinking temperature and the shape, etc., but a range of one minute or longer and 5 hours or shorter is preferable in terms of the crosslinking density and production efficiency. Also, there are some cases where the inside is not sufficiently crosslinked while the surface is crosslinked depending on the shape and size of the crosslinked object, etc., so that secondary crosslinking may be performed.

A heating method for crosslinking may be suitably selected from methods used in crosslinking normal rubber, such as press heating, evaporation heating, oven heating and hot air heating.

The crosslinked object of the present invention has excellent ozone resistance and oil resistance, furthermore, excellent resistance to cracking caused by solvents. Therefore, it is suitably used as a composing material of industrial parts, such as a hose, belt, seal and roll. Specifically, it is suitable as a composing material of industrial parts, such as filler hose and other fuel hose for vehicles, other general fuel hose, timing belts, packing, oil seal, rolls, interior parts of vehicles, seal of fuel systems and gaskets. Particularly, it is extremely suitable to rolls for printing, pinning, paper manufacturing, dyeing and iron manufacturing, etc. requiring resistance to solvents.

### EXAMPLES

Below, the present invention will be explained in detail by taking examples and comparative examples. Below, "part" and "%" are based on weight unless otherwise mentioned.

### Example 1

First, the rubber (A) was produced as explained below. 100 parts of a monomer mixture (55% of butadiene and 45% of acrylonitrile), 270 parts of ion-exchange water, 3 parts of potassium oleate (an emulsifier), 0.1 part of sodium formaldehyde sulfoxylate, 0.01 part of cumene hydroperoxide (polymerization initiator) and 0.51 part of tert-dodecyl mercaptan (a molecular weight adjusting agent) are set in an autoclave replaced with nitrogen, brought to react at a reaction temperature of 10 °C until an conversion of the monomer reaches 85%, and added with 0.1 part of hydroxylamine sulfate as a terminator to stop the reaction. Emulsion polymerization reaction liquid is taken out, and steam at 100°C is blown. Emulsion polymerization liquid, wherein unreacted monomer is removed, is added to 1000 parts of 0.5% aluminum sulfate solution to coagulate copolymer rubber, the coagulation is washed with water sufficiently, and dried at 80°C or so for three hours, so that acrylonitrile-butadiene copolymer rubber (A) having units derived from an acrylonitrile monomer in an amount of 42.5%, Mooney's viscosity (ML₁₊₄, 100°C) measured based on the JIS-K6300 of 78 and a number-average molecular weight of 85,000 was obtained. Note that the number-average molecular weight was measured by gel permeation chromatography in terms of standard polystyrene equivalent by using tetrahydrofurane as a solvent. It will be the same in later explained rubber (C1 to C3).

Next, the copolymer (B1) was produced as explained below. 150 parts of ion-exchange water, 1.5 parts of potassium oleate (an emulsifier), 0.3 part of ammonium persulfate (polymerization initiator), 60 parts of ethyl acrylate and 40 parts of acrylonitrile are put in a reactor brought to react at 80°C for 12 hours while agitating, and the polymerization was stopped. The polymerization conversion was 98.1%. The obtained copolymer (B1) had an amount of units derived from an acrylonitrile monomer of 38.7% and an average particle diameter of about 0.11 µm. A size of acryl copolymer particle was measured by using a light scattering method particle size analyzer (model N4 made by Coulter Inc.). Particles of the copolymer B1 were dissolved in tetrahydrofurane to measure the number average molecular weight in terms of polystyrene as the standard substance by gel permeation chromatography. It was 660,000 or so. A step of filtering the polymerization reaction solution to collect particles of the copolymer B1, dispersing the collected particles in pure water and filtering again to collect was repeated for two times, then, dried to obtain particles of the copolymer B1. A glass transition temperature of the particles was measured and was 21.0 °C. The glass transition temperature was measured by the differential scanning calorimetry method (DSC method). Note that the particles of the copolymer B1 did not have a melting temperature. It was the same in the later explained copolymer B2.

Next, the rubber (C1) was produced as explained below. 100 parts of a monomer mixture (55% of butadiene and 45% of acrylonitrile), 200 parts of ion-exchange water, 2 parts of dodecylbenzen sodium sulfonate (an emulsifier), 0.2 part of sodium sulfate, 0.3 part of ammonium persulfate (polymerization initiator) and 10 parts of tert-dodecyl mercaptan (a molecular weight adjusting agent) are set in an autoclave replaced with nitrogen, brought to react at a reaction temperature of 35°C until an conversion rate of the monomer reaches 85%, and added with 0.5 part of hydroxylamine sulfate as a terminator to stop the reaction. Emulsion polymerization reaction liquid is taken out, and steam at 100°C is blown. Emulsion polymerization liquid, wherein unreacted monomer is removed, in an amount of 280 parts is added to 1000 parts of 0.5% aluminum sulfate solution to coagulate copolymer rubber, the coagulation is washed with water sufficiently, and dried at 80°C or so for three hours, so that acrylonitrile-butadiene copolymer rubber (rubber C1) having units derived from an acrylonitrile monomer in an amount of 43.3% and a number-average molecular weight of 4,030 was obtained.

Next, 50 parts of the rubber (A), 40 parts of the copolymer (B1) and 10 parts of the rubber (C1) were used to produce a polymer alloy by using a B-type Banbury (a temperature in the cavity is 50°C).

The obtained polymer alloy is added with 50 parts of carbon black (Asahi #50 made by Asahi Carbon Co. Ltd.), 5 parts of plasticizer A (dioctyl phthalate), 15 parts of a plasticizer B (adipic acid ester: ADK CIZER RS-107 made by Asahi Denka CO. Ltd), 1 part of stearic acid, 5 parts of zinc oxide (zinc flower #1), 0.5 part of sulfur (sieved by 325-mesh), 1.5 parts of N-cyclohexyl-2-benzothiazolyl sulfenamide, and 1.5 parts of tetramethylthiuram disulfide, so that a crosslinkable polymer alloy was obtained. The crosslinkable polymer alloy was subjected to press crosslinking under a condition of 160 °C for 20 minutes, and a crosslinked sheet having a thickness of 2 mm for test was produced. By using the crosslinked sheet, oil resistance, ozone resistance and resistance to cracking caused by solvents were evaluated.

Oil resistance (an oil resistance test) was evaluated by a volume expanding rate ΔV (unit: %) obtained by immersing the crosslinked sheet in fuel oil C (Fuel-C: mixture of isooctane and toluene in a volume ratio of 1:1) adjusted to be 40°C for 48 hours based on the JIS-K6258. The smaller the volume expanding rate is, the more excellent the oil resistance is. The results are shown in Table 1.

Evaluation of ozone resistance (static ozone test) was made on states under a condition of 40°C, ozone concentration of 50 pphm and 50% expansion after 24 hours, 96 hours, 120 hours and 144 hours. The less later explained arising of cracks is, the more excellent the ozone resistance is. Evaluation was indicated by the following abbreviations. "NC" indicates that no cracks were observed. In "A1 to A3, B1 to B3 and C1 to C3", alphabets indicate the number of cracks: B is larger than A and C is larger than B. the larger the number is, the larger a size of the crack is. "Cut" indicates that the crosslinked sheet broke. The results are shown in Table 1.

Resistance to cracking caused by solvents (a test on crack growing by solvents) was obtained by drawing a standard lines in 20 mm intervals at the center part of a strip specimen, which is the crosslinked sheet in a size of 10 mm in width and 100 mm in length, making scars having a width of 2 mm and reaching to the back surface by a razor in the parallel direction with the standard lines at midpoints between the standard lines, then, attaching the test piece to a jig capable of expanding to any length and expanding until the expansion rate becomes 100%. The test piece in the expanded state is immersed in predetermined Fuel-C at 40 °C and time for the test piece to break was measured. The longer the time to break is, the more excellent the resistance to cracking caused by solvents is. The results are shown in Table 1.

### Example 2

Other than changing to 40 parts of the rubber (A), 40 parts of the copolymer (B1) and 20 parts of the rubber (C1), a polymer alloy and a crosslinked sheet having a thickness of 2 mm for testing were produced in the same way as in the example 1 and evaluation was made on the oil resistance, ozone resistance and resistance to cracking caused by solvents. The results are shown in Table 1.

### Example 3

Other than changing to 30 parts of the rubber (A), 50 parts of the copolymer (B1) and 20 parts of the rubber (G1), a polymer alloy and a crosslinked sheet having a thickness of 2 mm for testing were produced in the same way as in the example 1 and evaluation was made on the oil resistance, ozone resistance and resistance to cracking caused by solvents. The results are shown in Table 1.

### Example 4

First, a copolymer (B2) was produced as explained below. Other than using n-butyl acrylate instead of ethyl acrylate and changing a use amount of acrylonitrile, an acrylic copolymer (copolymer B2) having an amount of units derived from an acrylinitrile monomer of 44.5%, an average particle diameter of about 0.11 µm, a number-average molecular weight of about 680000 and a glass transition temperature of 26.8°C was obtained in the same way as in the example 1.

Next, rubber (C2) was produced as explained below. Other than changing an amount of tert-dodecyl mercaptan (a molecular weight adjusting agent) to 6 parts, copolymer rubber was coagulated and dried in the same way as in the example 1. The obtained rubber was acrylonitrile-butadiene copolymer rubber (rubber (C2)) in a liquid state having an amount of units of an acrylonitrile monomer of 43.9% and a number-average molecular weight of 6500.

Next, 45 parts of the rubber (A) used in the example 1, 40 parts of the copolymer (B2) and 15 parts of the rubber (C2) were used to produce a polymer alloy and a crosslinked sheet having a thickness of 2 mm for testing in the same way as in the example 1, and evaluation was made on oil resistance, ozone resistance and resistance to cracking caused by solvents. The results are shown in Table 1.

### Example 5

Rubber (C3) was produced as explained below. Other than using 100 parts of a monomer mixture (67% of butadiene and 33% of acrylonitrile), copolymer rubber was coagulated and dried in the same way as in the example 1. The obtained rubber was avrylonitrile-butadiene copolymer rubber (rubber (C3)) in a liquid state having an amount of units of an acrylonitrile monomer of 31.8% and a number-average molecular weight of 4700.

Next, 45 parts of the rubber (A) used in the example 1, 40 parts of the copolymer (B2) used in the example 4 and 15 parts of the rubber (C3) were used to produce a polymer alloy and a crosslinked sheet having a thickness of 2 mm for testing in the same way as in the example 1, and evaluation was made on oil resistance, ozone resistance and resistance to cracking caused by solvents.

### Example 6

By using 10 parts of the rubber (A), 50 parts of the copolymer (B1) and 40 parts of the rubber (C1), a polymer alloy and a crosslinked sheet having a thickness of 2 mm for testing were produced in the same way as in the example 1, and evaluation was made on oil resistance, ozone resistance and resistance to cracking caused by solvents. The results are shown in Table 1.

### Example 7

By using 75 parts of the rubber (A), 15 parts of the copolymer (B1) and 10 parts of the rubber (C1), a polymer alloy and a crosslinked sheet having a thickness of 2 mm for testing were produced in the same way as in the example 1, and evaluation was made on oil resistance, ozone resistance and resistance to cracking caused by solvents. The results are shown in Table 1.

### Comparative Example 1

By using 3 parts of the rubber (A), 20 parts of the copolymer (B1) and 67 parts of the rubber (C1), a polymer alloy and a crosslinked sheet having a thickness of 2 mm for testing were produced in the same way as in the example 1, and evaluation was made on oil resistance, ozone resistance and resistance to cracking caused by solvents. The results are shown in Table 1.

### Comparative Example 2

By using 96 parts of the rubber (A), 3 parts of the copolymer (B1) and 1 parts of the rubber (C1), a polymer alloy and a crosslinked sheet having a thickness of 2 mm for testing were produced in the same way as in the example 1, and evaluation was made on oil resistance, ozone resistance and resistance to cracking caused by solvents. The results are shown in Table 1.

### Comparative Example 3

By using 50 parts of the rubber (A), 5 parts of the copolymer (B1) and 45 parts of the rubber (C1), a polymer alloy and a crosslinked sheet having a thickness of 2 mm for testing were produced in the same way as in the example 1, and evaluation was made on oil resistance, ozone resistance and resistance to cracking caused by solvents. The results are shown in Table 1.

### Comparative Example 4

By not using the rubber (C1), 45 parts of the rubber (A) and 55 parts of the copolymer (B1), a polymer alloy and a crosslinked sheet having a thickness of 2 mm for testing were produced in the same way as in the example 1, and evaluation was made on oil resistance, ozone resistance and resistance to cracking caused by solvents. The results are shown in Table 1.

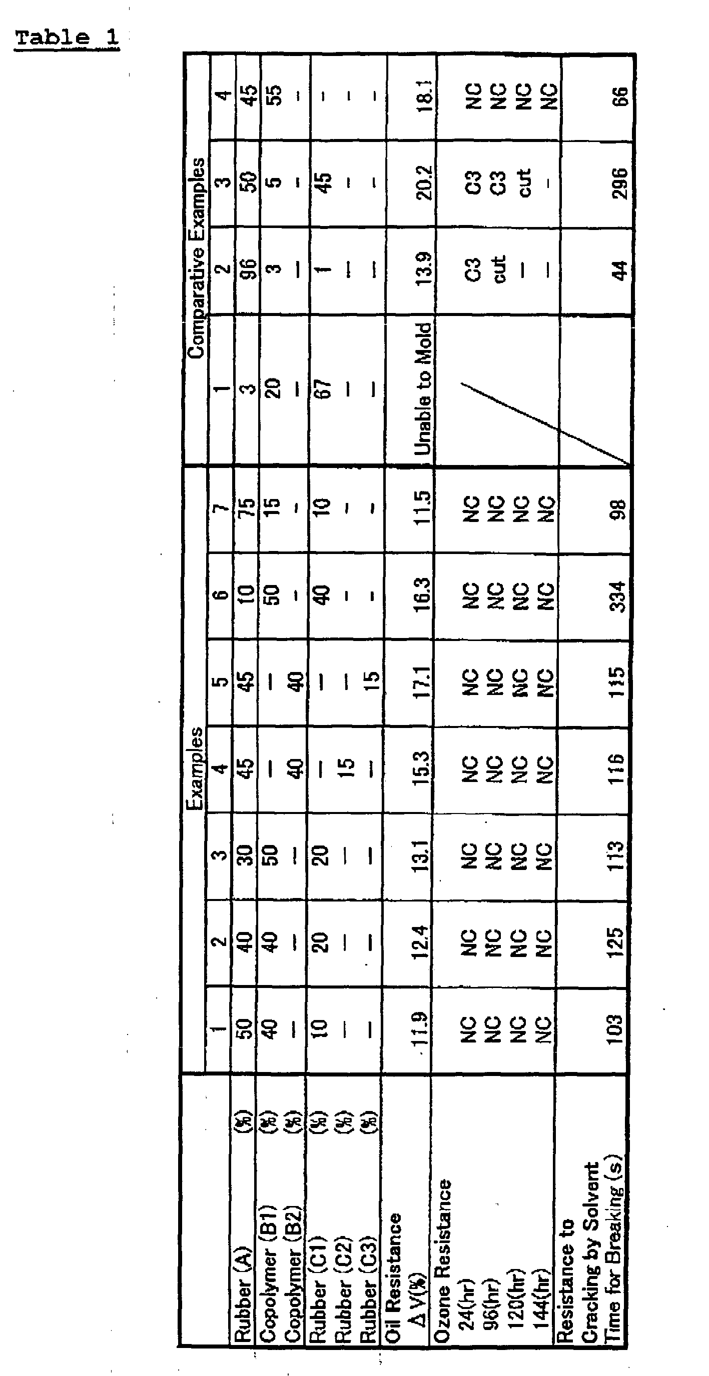

From Table 1, the following can be known.

In the comparative example 1, wherein a content of the rubber (A) was small and a content of the rubber (C1) was too large, the crosslinked sheet exhibited low viscosity and strong adhesiveness, so that molding was difficult.

The comparative example 2, wherein a quantity of the rubber (A) is large and contents of the copolymer (B1) and rubber (C1) are small, was poor in both of the ozone resistance and resistance to cracking caused by solvents.

The comparative example 3, wherein a content of the copolymer (B1) was small, exhibited extremely preferable resistance to cracking caused by solvents but poor ozone resistance.

The comparative example 4 not including the rubber (C1 to C3) exhibited preferable ozone resistance but poor resistance to cracking caused by solvents.

On the other hand, all of the examples 1 to 7 within the range of the present invention exhibited preferable results in the oil resistance, ozone resistance and resistance to cracking caused by solvents, and it is understood that these characteristics are well balanced.

## Claims

1. A polymer alloy composed of 5 to 88 wt% of α,β-ethylenically unsaturated nitrile-conjugated diene copolymer rubber (A) having a number-average molecular weight of 50,000 to 150,000, 10 to 60 wt% of an acrylic copolymer (B) including units derived from an α,β-ethylenically unsaturated nitrile monomer, and 2 to 50 wt% of α,β-ethylenically unsaturated nitrile-conjugated diene copolymer rubber (C) having a number-average molecular weight of 1,000 to 20,000.

2. The polymer alloy as set forth in claim 1, wherein a content of units derived from an α,β-ethylenically unsaturated nitrile monomer in the acrylic copolymer (B) is 1 to 65wt%.

3. A crosslinkable polymer alloy formed by blending a crosslinking agent in the polymer alloy as set forth in claim 1 or 2.

4. A crosslinked object formed by performing crosslinking on the crosslinkable polymer alloy as set froth in claim 3.

5. An industrial part comprising the crosslinked object as set forth in claim 4.
